# EUROPÄISCHE PATENTSCHRIFT

(11) **EP 3 921 209 B1**
(45) Veröffentlichungstag und Bekanntmachung des Hinweises auf die Patenterteilung: **07.12.2022**
(21) Anmeldenummer: 20704472.8
(22) Anmeldetag: 05.02.2020
(51) Int. Cl.: B60R 21/239, B60R 21/2338

(54) **GASSACK FÜR EIN FAHRZEUGINSASSEN-RÜCKHALTESYSTEM**
AIRBAG FOR A VEHICLE OCCUPANT RESTRAINING SYSTEM
AIRBAG POUR UN SYSTÈME DE RETENUE DES OCCUPANTS D'UN VÉHICULE

(30) Priorität: 08.02.2019 DE 202019100719 U
(43) Veröffentlichungstag der Anmeldung: 15.12.2021
(73) Patentinhaber: Dalphi Metal España, S.A., 36213 Vigo (ES); Safelife Industria de Componentes de Seguranca Automovel S.A., 4990-645 Gemieira (PT)
(72) Erfinder: ROCHA, Diogo, 4900-749 Viano do Castelo (PT)
(74) Vertreter: ZF Patentabteilung - DIPS
(86) Internationale Anmeldenummer: PCT/EP2020/052807
(87) Internationale Veröffentlichungsnummer: WO 2020/161160

(56) Entgegenhaltungen:
- EP-A1- 2 832 592
- EP-A2- 1 391 355
- DE-A1-102015 110 365
- US-B1- 9 216 712

## Beschreibung

Die Erfindung betrifft einen Gassack für ein Fahrzeuginsassen-Rückhaltesystem, mit einer Gassackwand, die ein aufblasbares Gassackvolumen definiert, einem Fangband, welches sich im Inneren des Gassacks durch das aufblasbare Gassackvolumen erstreckt, einer Abströmöffnung, die in der Gassackwand ausgebildet ist, sowie einem Abströmöffnungsverschluss zum Verschließen der Abströmöffnung, wobei sich das Fangband von einem fest mit der Gassackwand verbundenen ersten Fangbandende in Richtung zur Abströmöffnung bis zu einem entgegengesetzten zweiten Fangbandende erstreckt, wobei der Abströmöffnungsverschluss sowohl mit dem zweiten Fangbandende als auch mit der Gassackwand verbunden ist, und wobei das Fangband zwischen einem ersten Verzweigungspunkt und einem zweiten Verzweigungspunkt zweilagig ausgebildet ist und zwei Bandlagen aufweist, wobei die erste Bandlage und die zweite Bandlage zwischen den beiden Verzweigungspunkten unverbunden sind.

Aus dem Stand der Technik sind bereits Gassäcke bekannt, die abgesehen von dauerhaft offenen Abströmöffnungen auch adaptive Abströmöffnungen aufweisen, welche abhängig von vorbestimmten Randbedingungen wie z.B. einer Entfaltungsform des Gassacks und/oder einer Sitzposition des Fahrzeuginsassen wahlweise geöffnet oder zumindest teilweise geschlossen sind.

Die DE 10 2015 110 365 A1 zeigt einen Gassack nach dem Oberbegriff von Anspruch 1, mit einer adaptiven Abströmöffnung, die im vollständig aufgeblasenen und entfalteten Zustand des Gassacks geschlossen ist und beim Eintauchen des Insassen in den Gassack geöffnet wird. Die Anpassung der adaptiven Abströmöffnung erfolgt dabei mittels eines Fangbands "passiv", insbesondere ausschließlich infolge einer Gassackdeformation durch den Fahrzeuginsassen. Eine elektrische, pyrotechnische oder andere "aktive" Ansteuervorrichtung zum Öffnen und/oder Verschließen der Abströmöffnung ist nicht nötig, wodurch sich der Fertigungsaufwand und die Komplexität des Fahrzeuginsassen-Rückhaltesystems reduziert.

Trifft ein Insasse auf die Gassackwand des aufgeblasenen Gassacks auf, wird diese verformt und die adaptive Abströmöffnung freigegeben, sodass der Insasse bei abströmendem Generatorgas in den Gassack eintaucht und vergleichsweise sanft abgebremst wird. Ein unerwünschter Rückfedereffekt des Insassen vom Gassack wird verhindert oder zumindest verringert.

Diese vorteilhafte Rückhaltewirkung stellt sich allerdings nur dann ein, wenn der Insasse im Befestigungsbereich des Fangbands auf die Gassackwand prallt. Befindet sich der Insasse beim Fahrzeugcrash in einer ungewöhnlichen Sitzposition und trifft außerhalb dieses Befestigungsbereichs auf den Gassack auf, wird der passive Freigabemechanismus für die Abströmöffnung nicht aktiviert und die Abströmöffnung bleibt geschlossen.

Aufgabe der Erfindung ist die Schaffung eines konstruktiv möglichst einfach aufgebauten Gassacks mit einer passiv ansteuerbaren, adaptiven Abströmöffnung, die auch dann freigegeben wird und für eine vorteilhafte Rückhaltwirkung sorgt, wenn ein Insasse außerhalb des üblichen Aufprallbereichs auf den Gassack auftrifft.

Erfindungsgemäß wird diese Aufgabe gelöst durch einen Gassack der eingangs genannten Art, welcher ein Steuerband umfasst, das sich quer zum Fangband durch das aufblasbare Gassackvolumen erstreckt und zwei Steuerbandabschnitte aufweist, wobei ein erster Steuerbandabschnitt an der Gassackwand sowie an der ersten Bandlage und ein zweiter Steuerbandabschnitt an der Gassackwand sowie an der zweiten Bandlage befestigt ist.

Das Steuerband sowie dessen geschickte Kopplung mit dem Fangband erhöht die Sensitivität der passiv ansteuerbaren, adaptiven Abströmöffnung und führt nunmehr auch dann zu einer Freigabe der Abströmöffnung, wenn sich der Insasse in einem Bereich des Gassacks befindet, in dem das Steuerband an der Gassackwand befestigt ist.

Im Rahmen dieser Anmeldung verbindet das Fangband funktional die Gassackwand mit dem Abströmöffnungsverschluss, während das Steuerband funktional zwei Abschnitte, insbesondere zwei gegenüberliegende Abschnitte der Gassackwand verbindet. In einem Kreuzungsbereich sind die beiden Bänder so miteinander gekoppelt, dass sich für unterschiedliche Aufprallsituationen vorteilhafte Rückhaltewirkungen ergeben. Strukturell können das Fangband und das Steuerband in unterschiedlichster Weise aus separaten Bandabschnitten zusammengesetzt sein, die dann miteinander verbunden, insbesondere miteinander vernäht sind. So können die beiden Bandlagen des Fangbands als separate Bandabschnitte hergestellt sein. Alternativ ist jedoch auch denkbar, dass zum Beispiel eine der Bandlagen einstückig in das Fangband oder Steuerband integriert ist.

Das Fangband ist zwischen einem ersten Verzweigungspunkt und einem zweiten Verzweigungspunkt zweilagig ausgeführt, wobei der erste Steuerbandabschnitt in einem ersten Kopplungspunkt im Wesentlichen mittig zwischen den Verzweigungspunkten an der ersten Bandlage befestigt ist und der zweite Steuerbandabschnitt in einem zweiten Kopplungspunkt im Wesentlichen mittig zwischen den Verzweigungspunkten an der zweiten Bandlage befestigt ist. In diesem Fall werden die Bandlagen bei einer Zugbeanspruchung des Fangbands und des Steuerbands besonders gleichmäßig beansprucht und gewährleisten eine zuverlässige und gut reproduzierbare Ansteuerung der adaptiven Abströmöffnung.

Die erste Bandlage und die zweite Bandlage sind zwischen den beiden Verzweigungspunkten unverbunden, sodass die beiden Bandlagen im aufgeblasenen Zustand des Gassacks insbesondere eine Raute ausbilden, wobei die beiden Verzweigungspunkte und die beiden Kopplungspunkte jeweils einen Eckpunkt der Raute bilden. Abhängig von einem Verhältnis der Zugkräfte im Fangband und im Steuerband ist die Rautenform veränderlich zwischen einer ersten Extremstellung, in der sich die Bandlagen nahezu parallel zum Fangband erstrecken, über eine Mittelstellung, in der die Raute im Wesentlichen ein Quadrat ist, bis hin zu einer zweiten Extremstellung, in der sich die Bandlagen nahezu parallel zum Steuerband erstrecken.

Bei vollständig aufgeblasenem Gassack können eine Verbindungsstelle des ersten Steuerbandabschnitts mit der Gassackwand und eine Verbindungsstelle des zweiten Steuerbandabschnitts mit der Gassackwand einander im Wesentlichen gegenüberliegen. Insbesondere erstrecken sich die beiden Steuerbandabschnitte bei vollständig aufgeblasenem Gassack im Wesentlichen längs einer Geraden, welche durch ein Zentrum des Gassacks verläuft.

Gemäß einer Ausführungsform des Gassacks umfasst der Abströmöffnungsverschluss zum Verschließen der Abströmöffnung zwei Verschlusslappen, welche im Inneren des Gassacks am zweiten Fangbandende befestigt sind, wobei sich die Verschlusslappen vom Inneren des Gassacks durch die Abströmöffnung nach außerhalb des Gassacks erstrecken und von außen an der Gassackwand befestigt sind.

Vorzugsweise ist der Abströmöffnungsverschluss bei aufgeblasenem Gassack durch einen Gassackinnendruck in Richtung einer Offenstellung beaufschlagt, welche die Abströmöffnung für einen Gasstrom freigibt.

Gemäß einer weiteren Ausführungsform des Gassacks sind eine Fangbandlänge, eine Steuerbandlänge und eine Länge der beiden Bandlagen so auf eine Geometrie des Gassacks abgestimmt, dass der Abströmöffnungsverschluss bei vollständig aufgeblasenem Gassack eine Schließstellung einnimmt, in welcher die Abströmöffnung im Wesentlichen geschlossen ist. Vor dem Aufprall eines Insassen können auf diese Weise unerwünschte Gasverluste geringgehalten werden. Erst bei einer geeigneten Deformation des Gassacks wird die Abströmöffnung freigegeben, um zum Beispiel weniger aggressives Entfaltungsverhalten des Gassacks oder ein gedämpftes Eintauchen des Insassen und damit eine vorteilhafte Rückhaltewirkung zu gewährleisten.

Die Gassackwand des aufgeblasenen Gassacks kann insbesondere einen dem Insassen zugewandten Frontwandabschnitt und einen vom Insassen abgewandten Rückwandabschnitt aufweisen, wobei die Abströmöffnung im Rückwandabschnitt ausgebildet und das erste Fangbandende fest mit dem Frontwandabschnitt verbunden ist. Eine Befestigung des ersten Fangbandendes am Frontwandabschnitt stellt sicher, dass die adaptive Abströmöffnung bei einem Insassenaufprall auf den Frontwandabschnitt freigegeben wird, sodass der Insasse gedämpft in den Gassack eintaucht und abgebremst wird. Eine im Wesentlichen gegenüberliegende Anordnung der Abströmöffnung im Rückwandabschnitt bietet den Vorteil, dass der Insasse bei freigegebener Abströmöffnung nicht direkt vom Generatorgas angeströmt wird.

Im Übrigen betrifft die Erfindung auch eine Lenkradbaugruppe mit einem Fahrzeuglenkrad, das um eine Lenkachse drehbar ist, und einem Gassackmodul, das einen oben beschriebenen Gassack aufweist.

Weitere Merkmale und Vorteile der Erfindung ergeben sich aus der nachfolgenden Beschreibung einer bevorzugten Ausführungsform unter Bezugnahme auf die Zeichnungen. In diesen zeigt:
- Figur 1 einen schematischen Schnitt durch eine erfindungsgemäße Lenkradbaugruppe mit einem erfindungsgemäßen Gassack im vollständig aufgeblasenen und nicht-deformierten Zustand;
- Figur 2 einen schematischen Schnitt durch die Lenkradbaugruppe gemäß Figur 1 zu Beginn einer frontalen Deformation des Gassacks;
- Figur 3 einen schematischen Schnitt durch die Lenkradbaugruppe gemäß Figur 1 im fortgeschrittenen Stadium einer frontalen Deformation des Gassacks; und
- Figur 4 einen schematischen Schnitt durch die Lenkradbaugruppe gemäß Figur 1 bei einer seitlichen Deformation des Gassacks.

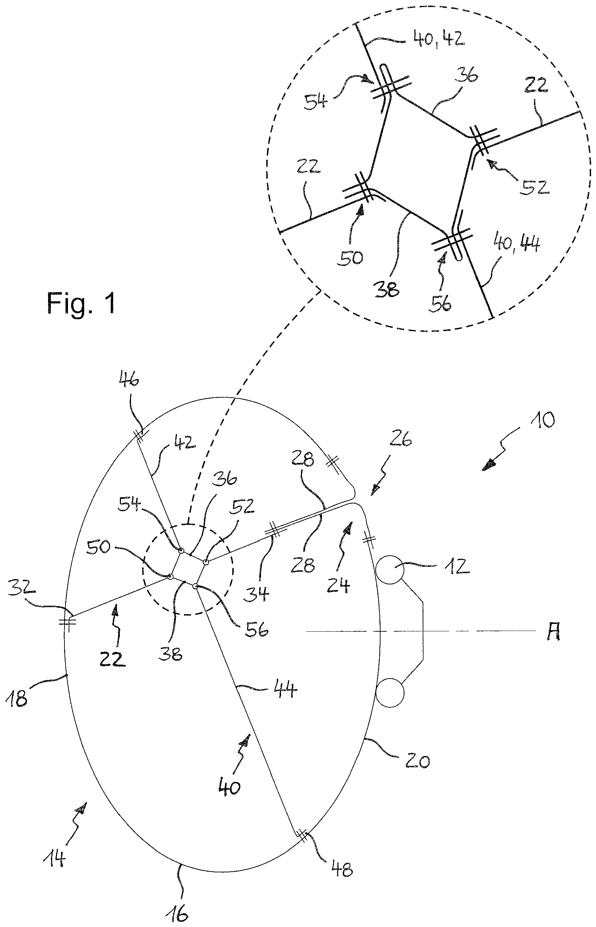

Die Figuren 1 bis 4 zeigen eine Lenkradbaugruppe 10 mit einem Fahrzeuglenkrad 12, das um eine Lenkachse A drehbar ist, sowie einem Gassackmodul, das im Bereich einer Lenkradnabe montiert ist und einen Gassack 14 für ein Fahrzeuginsassen-Rückhaltesystem aufweist.

Das im Folgenden noch näher erläuterte, allgemeine Funktionsprinzip des Gassacks 14 lässt sich jedoch ohne Weiteres auch auf andere Einsatzgebiete von Gassackmodulen übertragen. Folglich muss der Gassack 14 nicht zwangsläufig ein fahrerseitiger Frontgassack sein, sondern ist mit geringen Anpassungen auch anderweitig einsetzbar, beispielsweise als Beifahrergassack.

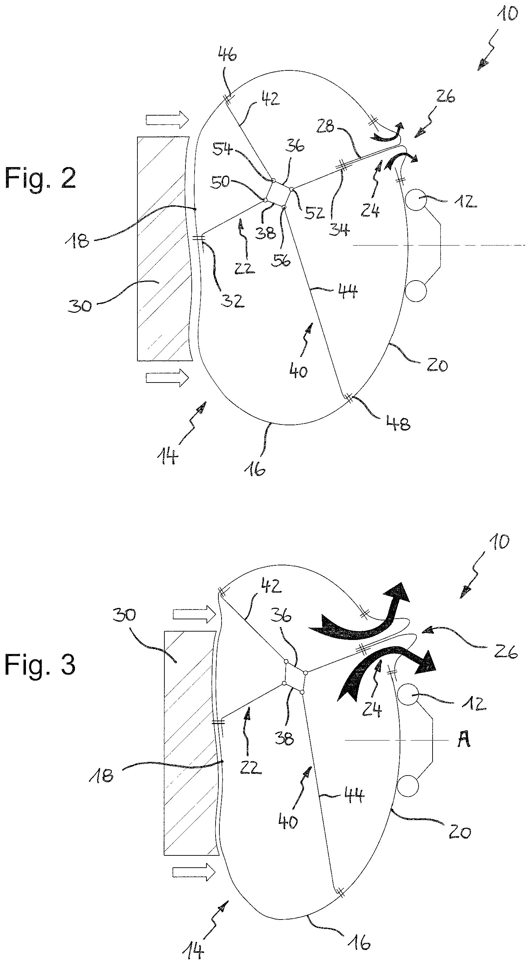

Der Gassack 14 umfasst eine Gassackwand 16, die einen Frontwandabschnitt 18 und einen Rückwandabschnitt 20 aufweist sowie ein aufblasbares Gassackvolumen definiert, ein Fangband 22, welches sich im Inneren des Gassacks 14 durch das aufblasbare Gassackvolumen erstreckt, eine Abströmöffnung 24, die im Rückwandabschnitt 20 der Gassackwand 16 ausgebildet ist, sowie einen Abströmöffnungsverschluss 26 zum Verschließen der Abströmöffnung 24. Als Frontwandabschnitt 18 wird in diesem Zusammenhang ein Abschnitt der Gassackwand 16 bezeichnet, der im aufgeblasenen Zustand des Gassacks 14 einem Fahrzeuginsassen 30 zugewandt ist, wobei in den Figuren 2 bis 4 lediglich ein Körperteil des Fahrzeuginsassen 30 schematisch angedeutet ist. Der Rückwandabschnitt 20 ist entsprechend ein dem Frontwandabschnitt 18 gegenüberliegender, vom Fahrzeuginsassen 30 abgewandter Abschnitt der Gassackwand 16.

Das Fangband 22 erstreckt sich im aufgeblasenen Zustand des Gassacks 14 von einem fest mit dem Frontwandabschnitt 18 verbundenen, insbesondere vernähten ersten Fangbandende 32 in Richtung zur Abströmöffnung 24 hin, bis zu einem entgegengesetzten zweiten Fangbandende 34.

Der Abströmöffnungsverschluss 26 ist dabei sowohl mit dem zweiten Fangbandende 34 als auch mit der Gassackwand 16 verbunden, insbesondere vernäht. Konkret umfasst der Abströmöffnungsverschluss 26 zum Verschließen der Abströmöffnung 24 im vorliegenden Ausführungsbeispiel zwei Verschlusslappen 28, welche im Inneren des Gassacks 14 mit dem zweiten Fangbandende 34 verbunden, insbesondere vernäht sind, wobei sich die Verschlusslappen 28 vom Inneren des Gassacks 14 durch die Abströmöffnung 24 nach außerhalb des Gassacks 14 erstrecken und auf entgegengesetzten Seiten der Abströmöffnung 14 von außen mit dem Rückwandabschnitt 20 der Gassackwand 16 verbunden, insbesondere vernäht sind.

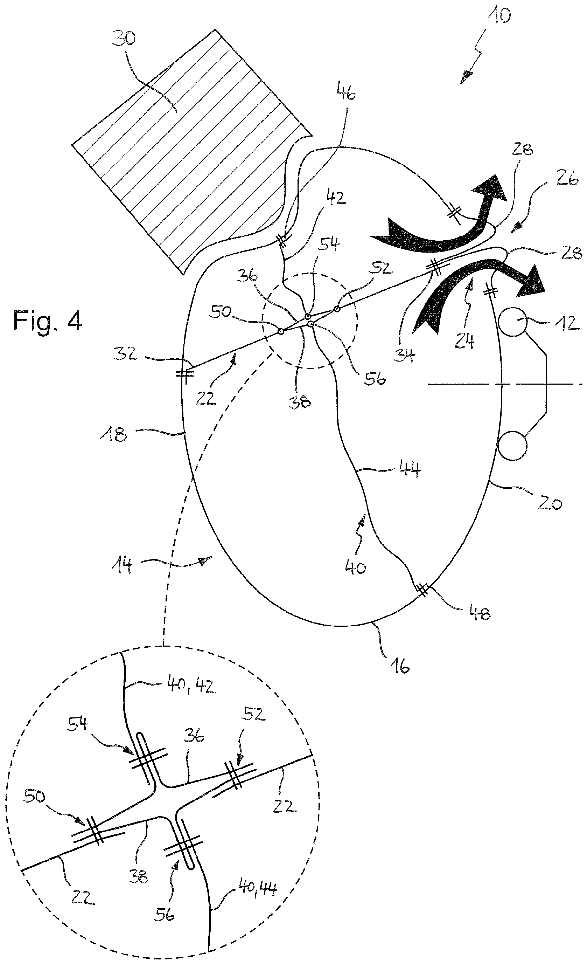

Der Abströmöffnungsverschluss 26 wird bei aufgeblasenem Gassack 14 durch einen Gassackinnendruck in Richtung einer Offenstellung beaufschlagt, in welcher die Abströmöffnung 24 für einen Gasstrom freigegeben ist (siehe Figuren 3 und 4).

Das Fangband 22 ist gemäß den Figuren 1 bis 4 abschnittsweise zweilagig ausgebildet und weist in diesem Fangbandabschnitt eine erste Bandlage 36 sowie eine zweite Bandlage 38 auf.

Der Gassack 14 umfasst ferner ein Steuerband 40, welches zwei Steuerbandabschnitte 42, 44 aufweist mit dem Fangband 22 gekoppelt ist. Mit Ausnahme des Kopplungsbereichs mit dem Fangband erstreckt sich das Steuerband 40 im Inneren des Gassacks 14 quer, im vollständig aufgeblasenen und nicht-deformierten Zustand des Gassacks 14 insbesondere im Wesentlichen senkrecht zum Fangband 22. Ein erster Steuerbandabschnitt 42 ist dabei an der Gassackwand 16 sowie an der ersten Bandlage 36 und ein zweiter Steuerbandabschnitt 44 an der Gassackwand 16 sowie an der zweiten Bandlage 38 befestigt.

In der dargestellten Ausführungsform liegen im aufgeblasenen Zustand des Gassacks 14 eine Verbindungsstelle 46 des ersten Steuerbandabschnitts 42 mit der Gassackwand 16 und eine Verbindungsstelle 48 des zweiten Steuerbandabschnitts 44 mit der Gassackwand 16 einander im Wesentlichen gegenüber, wobei sich das Steuerband 40 durch ein Gassackzentrum erstreckt. Gemäß Figur 1 liegen die beiden Steuerbandabschnitte 42, 44 bei vollständig aufgeblasenem und nichtdeformiertem Gassack 14 insbesondere im Wesentlichen auf einer Geraden.

Das Fangband 22 ist zwischen einem ersten Verzweigungspunkt 50 und einem zweiten Verzweigungspunkt 52 zweilagig ausgeführt, wobei der erste Steuerbandabschnitt 42 in einem ersten Kopplungspunkt 54 mittig zwischen den Verzweigungspunkten 50, 52 an der ersten Bandlage 36 befestigt ist. Der zweite Steuerbandabschnitt 44 ist entsprechend in einem zweiten Kopplungspunkt 56 mittig zwischen den Verzweigungspunkten 46, 48 an der zweiten Bandlage 38 befestigt.

Die erste Bandlage 36 und die zweite Bandlage 38 sind zwischen den beiden Verzweigungspunkten 50, 52 unverbunden und bilden im aufgeblasenen Zustand des Gassacks 14 eine Raute aus, wobei die beiden Verzweigungspunkte 50, 52 und die beiden Kopplungspunkte 54, 56 jeweils einen Eckpunkt der Raute darstellen.

In den Detailausschnitten der Figuren 1 und 4 ist für den Kopplungsbereich zwischen dem Fangband 22 und dem Steuerband 40 eine konkrete Ausführungsvariante beispielhaft dargestellt. Dabei sind die erste Bandlage 36 und die zweite Bandlage 38 als separate Bandabschnitte ausgeführt, welche in den Verzweigungspunkten 50, 52 und den Kopplungspunkten 54, 56 mit weiteren Bandabschnitten des Fangbands 22 bzw. des Steuerbands 40 vernäht sind. Es ist jedoch klar, dass alternativ auch zahlreiche weitere Ausführungsvarianten denkbar sind. Beispielsweise kann eine der beiden Bandlagen 36, 38 in das Fangband 22 (oder das Steuerband 40) integriert sein, sodass sich das Fangband 22 (bzw. das Steuerband 40) einstückig zwischen seinen jeweiligen Verbindungsstellen mit der Gassackwand 16 erstreckt.

Die Figur 1 zeigt den Gassack 14 in einem vollständig aufgeblasenen und nicht-deformierten Zustand, wobei sowohl das Fangband 22 als auch das Steuerband 40 gespannt, das heißt zugbelastet sind. Bei etwa gleicher Zugbelastung im Fangband 22 und im Steuerband 40 bildet die oben erwähnte Raute eine etwa quadratische Form aus. Eine Fangbandlänge, eine Steuerbandlänge und eine Länge der beiden Bandlagen 36, 38 sind dabei so auf die Gassackgeometrie abgestimmt, dass der Abströmöffnungsverschluss 26 bei vollständig aufgeblasenem und nicht-deformiertem Gassack 14 eine Schließstellung einnimmt, in welcher die Abströmöffnung 24 weitestgehend geschlossen ist.

Die Figuren 2 und 3 zeigen eine Deformation des Gassacks 14, wie sie etwa durch einen Frontalaufprall eines Fahrzeuginsassen 30 hervorgerufen wird. Ein solcher Insassenaufprall im Verbindungsbereich des ersten Fangbandendes 32 mit dem Frontwandabschnitt 18 tritt immer dann auf, wenn sich der Fahrzeuginsasse 30 bei einem Fahrzeugcrash in einer "normalen", das heißt üblichen und damit für die Insassenrückhaltung optimalen Sitzposition befindet.

Der Rückwandabschnitt 20 des Gassacks 14 stützt sich dabei am Fahrzeuglenkrad 12 ab, und das erste Fangbandende 32 bewegt sich in Richtung zum Rückwandabschnitt 20. Aufgrund dieser Bewegung des Fangbandendes 32 und der Beaufschlagung des Abströmöffnungsverschlusses 26 durch den Gassackinnendruck in Richtung seiner Offenstellung, wird die Abströmöffnung 24 für einen Gasstrom freigegeben.

Zu Beginn der Gassackdeformation gemäß Figur 2 erfolgt die Freigabe der Abströmöffnung 24 nahezu unbeeinflusst vom Steuerband 40, da die Fangbandverschiebung im Wesentlichen senkrecht zum Steuerband 40 erfolgt. Bei stärkerer Gassackdeformation gemäß Figur 3 wird die zwischen dem Fangband 22 und dem Steuerband 40 gebildete Raute sowie der Gassack 14 im Bereich der Verbindungsstellen zwischen der dem Steuerband 40 und der Gassackwand 16 etwas verformt, was jedoch keinen nennenswerten Einfluss auf die Freigabe der Abströmöffnung 24 hat.

Das generelle Funktionsprinzip zur Freigabe der Abströmöffnung 24 bei einem Frontalaufprall des Fahrzeuginsassen 30 gemäß den Figuren 2 und 3 unterscheidet sich folglich nur unwesentlich von dem in der DE 10 2015 110 365 A1 beschriebenen Prinzip zur Freigabe einer Gasauslassöffnung.

Die Figur 4 zeigt eine Deformation des Gassacks 14, wie sie beispielsweise hervorgerufen wird, wenn sich der Fahrzeuginsasse 30 bei einem Fahrzeugcrash nicht in der "normalen", üblichen Sitzposition, sondern in einer ungewöhnlichen und damit für die Insassenrückhaltung nicht-optimalen Sitzposition befindet. In einem solchen Fall kommt der Fahrzeuginsasse 30 bei einer Aktivierung des Fahrzeuginsassen-Rückhaltesystems in einem Übergangsbereich von Frontwandabschnitt 18 und Rückwandabschnitt 20 mit der Gassackwand 16 in Kontakt, insbesondere in einem unteren Übergangsbereich oder, wie in Figur 4 dargestellt, in einem oberen Übergangsbereich.

Aus einem solchen Insassenkontakt resultiert eine Gassackverformung, welche die Spannung aus dem Steuerband 40 nimmt, sodass sich das Steuerband 40 lose im Gassackinneren erstreckt und nicht mehr durch eine Zugkraft beaufschlagt ist.

Das Fangband 22 bleibt jedoch weiterhin zugbelastet, da der Abströmöffnungsverschluss 26 durch den Gassackinnendruck in Richtung seiner Offenstellung beaufschlagt ist. Dementsprechend verformt sich die zwischen dem Fangband 22 und dem Steuerband 40 gebildete Raute so, dass sich die beiden Bandlagen 36, 38 im Wesentlichen in Längsrichtung des Fangbands 22 erstrecken (siehe Figur 4). Ausgehend vom vollständig aufgeblasenen und nicht-deformierten Zustand des Gassacks 14 gemäß Figur 1 entfernen sich die Verzweigungspunkte 50, 52 voneinander, was mit anderen Worten einer Verlängerung des Fangbands entspricht. Durch diesen Effekt wird die Abströmöffnung 24 auch dann freigegeben, wenn sich der Fahrzeuginsasse 30 bei einer Aktivierung des Fahrzeuginsassen-Rückhaltesystems in einer ungewöhnlichen Sitzposition befindet. Die Rückhaltewirkung für solch einen außergewöhnlich positionierten Fahrzeuginsassen 30 ist folglich ähnlich vorteilhaft wie für einen gewöhnlich positionierten Fahrzeuginsassen 30. Darüber hinaus ist bei Fahrzeuginsassen 30, die für eine Insassenrückhaltung nicht optimal positioniert sind, auch das Entfaltungsverhalten des Gassacks 14 aufgrund der möglichen Gasabströmung weniger aggressiv.

## Patentansprüche

1. Gassack für ein Fahrzeuginsassen-Rückhaltesystem, mit
einer Gassackwand (16), die ein aufblasbares Gassackvolumen definiert,
einem Fangband (22), welches sich im Inneren des Gassacks (14) durch das aufblasbare Gassackvolumen erstreckt,
einer Abströmöffnung (24), die in der Gassackwand (16) ausgebildet ist, und
einem Abströmöffnungsverschluss (26) zum Verschließen der Abströmöffnung (24),
wobei sich das Fangband (22) von einem fest mit der Gassackwand (16) verbundenen ersten Fangbandende (32) in Richtung zur Abströmöffnung (24) bis zu einem entgegengesetzten zweiten Fangbandende (34) erstreckt,
wobei der Abströmöffnungsverschluss (26) sowohl mit dem zweiten Fangbandende (34) als auch mit der Gassackwand (16) verbunden ist, und
wobei das Fangband (22) zwischen einem ersten Verzweigungspunkt (50) und einem zweiten Verzweigungspunkt (52) zweilagig ausgebildet ist und zwei Bandlagen (36, 38) aufweist,
wobei die erste Bandlage (36) und die zweite Bandlage (38) zwischen den beiden Verzweigungspunkten (50, 52) unverbunden sind,
**dadurch gekennzeichnet, dass** ein Steuerband (40) vorgesehen ist, welches sich quer zum Fangband (22) durch das aufblasbare Gassackvolumen erstreckt und zwei Steuerbandabschnitte (42, 44) aufweist,
wobei ein erster Steuerbandabschnitt (42) an der Gassackwand (16) sowie an der ersten Bandlage (36) und ein zweiter Steuerbandabschnitt (44) an der Gassackwand (16) sowie an der zweiten Bandlage (38) befestigt ist.

2. Gassack nach Anspruch 1, **dadurch gekennzeichnet, dass** das Fangband (22) zwischen einem ersten Verzweigungspunkt (50) und einem zweiten Verzweigungspunkt (52) zweilagig ausgeführt ist, wobei der erste Steuerbandabschnitt (42) in einem ersten Kopplungspunkt (54) im Wesentlichen mittig zwischen den Verzweigungspunkten (50, 52) an der ersten Bandlage (36) befestigt ist und der zweite Steuerbandabschnitt (44) in einem zweiten Kopplungspunkt (56) im Wesentlichen mittig zwischen den Verzweigungspunkten (50, 52) an der zweiten Bandlage (38) befestigt ist.

3. Gassack nach einem der vorhergehenden Ansprüche, **dadurch gekennzeichnet, dass** die beiden Bandlagen (36, 38) im aufgeblasenen Zustand des Gassacks (14 ) eine Raute ausbilden, wobei die beiden Verzweigungspunkte (50, 52) und die beiden Kopplungspunkte (54, 56) jeweils einen Eckpunkt der Raute bilden.

4. Gassack nach einem der vorhergehenden Ansprüche, **dadurch gekennzeichnet, dass** bei vollständig aufgeblasenem Gassack (14) eine Verbindungsstelle (46) des ersten Steuerbandabschnitts (42) mit der Gassackwand (16) und eine Verbindungsstelle (48) des zweiten Steuerbandabschnitts (44) mit der Gassackwand (16) einander im Wesentlichen gegenüberliegen.

5. Gassack nach einem der vorhergehenden Ansprüche, **dadurch gekennzeichnet, dass** der Abströmöffnungsverschluss (26) zum Verschließen der Abströmöffnung (24) zwei Verschlusslappen (28) umfasst, welche im Inneren des Gassacks (14) am zweiten Fangbandende (34) befestigt sind, wobei sich die Verschlusslappen (28) vom Inneren des Gassacks (14) durch die Abströmöffnung (24) nach außerhalb des Gassacks (14) erstrecken und von außen an der Gassackwand (16) befestigt sind.

6. Gassack nach einem der vorhergehenden Ansprüche, **dadurch gekennzeichnet, dass** der Abströmöffnungsverschluss (26) bei aufgeblasenem Gassack (14) durch einen Gassackinnendruck in Richtung einer Offenstellung beaufschlagt ist, welche die Abströmöffnung (24) für einen Gasstrom freigibt.

7. Gassack nach einem der vorhergehenden Ansprüche, **dadurch gekennzeichnet, dass** eine Fangbandlänge, eine Steuerbandlänge und eine Länge der beiden Bandlagen (36, 38) so auf eine Geometrie des Gassacks (14) abgestimmt sind, dass der Abströmöffnungsverschluss (26) bei vollständig aufgeblasenem Gassack (14) eine Schließstellung einnimmt, in welcher die Abströmöffnung (24) im Wesentlichen geschlossen ist.

8. Gassack nach einem der vorhergehenden Ansprüche, **dadurch gekennzeichnet, dass** die Gassackwand (16) einen Frontwandabschnitt (18) und einen Rückwandabschnitt (20) aufweist, wobei die Abströmöffnung (24) im Rückwandabschnitt (20) ausgebildet und das erste Fangbandende (32) fest mit dem Frontwandabschnitt (18) verbunden ist.

9. Lenkradbaugruppe mit einem Fahrzeuglenkrad (12), das um eine Lenkachse (A) drehbar ist, und einem Gassackmodul, das einen Gassack (14) nach einem der vorhergehenden Ansprüche aufweist.

## Claims

1. An airbag for a vehicle occupant restraint system, comprising
an airbag panel (16) which defines an inflatable airbag volume,
a tether (22) which extends in the interior of the airbag (14) through the inflatable airbag volume,
a discharge port (24) which is formed in the airbag panel (16), and
a discharge port closure (26) for closing the discharge port (24),
wherein the tether (22) extends from a first tether end (32) tightly connected to the airbag panel (16) in the direction of the discharge port (24) to an opposite second tether end (34),
wherein the discharge port closure (26) is connected both to the second tether end (34) and the airbag panel (16), and
wherein the tether (22) has a two-ply design and includes two strap layers (36, 38) between a first branching point (50) and a second branching point (52),
wherein the first strap layer (36) and the second strap layer (38) are not connected between the two branching points (50, 52),
**characterized in that** a control strap (40) is provided which extends transversely to the tether (22) through the inflatable airbag volume and includes two control strap portions (42, 44),
wherein a first control strap portion (42) is fastened to the airbag panel (16) as well as to the first strap layer (36) and a second control strap portion (44) is fastened to the airbag panel (16) as well as to the second strap layer (38).

2. The airbag according to claim 1, **characterized in that** the tether (22) has a two ply-design between a first branching point (50) and a second branching point (52), wherein the first control strap portion (42) is fastened to the first strap layer (36) in a first coupling point (54) substantially centrally between the branching points (50, 52) and the second control strap portion (44) is fastened to the second strap layer (38) in a second coupling point (56) substantially centrally between the branching points (50, 52).

3. The airbag according to any one of the preceding claims, **characterized in that** in the inflated state of the airbag (14) the two strap layers (36, 38) form a diamond, wherein each of the two branching points (50, 52) and the two coupling points (54, 56) form a vertex of the diamond.

4. The airbag according to any one of the preceding claims, **characterized in that** with a completely inflated airbag (14) a connecting point (46) of the first control strap portion (42) to the airbag panel (16) and a connecting point (48) of the second control strap portion (44) to the airbag panel (16) are substantially opposed to each other.

5. The airbag according to any one of the preceding claims, **characterized in that** the discharge port closure (26) for closing the discharge port (24) comprises two closure tabs (28) which in the interior of the airbag (14) is fastened to the second tether end (34), wherein the closure tabs (28) extend from the interior of the airbag (14) through the discharge port (24) to the outside of the airbag (14) and are fastened from outside to the airbag panel (16).

6. The airbag according to any one of the preceding claims, **characterized in that**, when the airbag (14) is inflated, the internal airbag pressure acts on the discharge port closure (26) in the direction of an open position which releases the discharge port (24) for a gas flow.

7. The airbag according to any one of the preceding claims, **characterized in that** a tether length, a control strap length and a length of the two strap layers (36, 38) are adapted to a geometry of the airbag (14) so that, when the airbag (14) is completely inflated, the discharge port closure (26) adopts a closing position in which the discharge port (24) is substantially closed.

8. The airbag according to any one of the preceding claims, **characterized in that** the airbag panel (16) includes a front panel portion (18) and a rear panel portion (20), with the discharge port (24) being formed in the rear panel portion (20) and the first tether end (32) being tightly connected to the front panel portion (18).

9. A steering wheel assembly comprising a vehicle steering wheel (12) which is rotatable about a steering axle (A) and an airbag module which includes an airbag (14) according to any one of the preceding claims.

## Revendications

1. Coussin gonflable pour un système de retenue des occupants d'un véhicule, comprenant
une paroi de coussin gonflable (16) qui définit un volume gonflable du coussin gonflable,
une bande de retenue (22) qui s'étend à l'intérieur du coussin gonflable (14) à travers le volume gonflable du coussin gonflable,
un orifice d'évacuation (24), qui est formé sur la paroi du coussin gonflable (16), et
une fermeture d'ouverture d'évacuation (26) pour fermer l'ouverture d'évacuation (24),
pour lequel la bande de retenue (22) s'étend d'une première extrémité de bande de retenue (32) reliée fixement à la paroi du coussin gonflable (16) en direction de l'ouverture d'évacuation (24) jusqu'à une deuxième extrémité de bande de retenue (34) opposée,
pour lequel la fermeture de l'ouverture d'évacuation (26) est reliée aussi bien à la deuxième extrémité de la bande de retenue (34) qu'à la paroi du coussin gonflable (16), et
pour lequel la bande de retenue (22) est formée de deux couches entre un premier point de ramification (50) et un deuxième point de ramification (52) et présentant deux couches de bande (36, 38),
pour lequel la première couche de bande (36) et la deuxième couche de bande (38) ne sont pas reliées entre les deux points de ramification (50, 52),
**caractérisé en ce qu'**il est prévu une bande de commande (40) qui s'étend transversalement à la bande de retenue (22) à travers le volume gonflable du coussin gonflable et qui présente deux portions de bande de commande (42, 44),
pour lequel une première portion de bande de commande (42) est fixée à la paroi du coussin gonflable (16) ainsi qu'à la première couche de bande (36) et une deuxième portion de bande de commande (44) est fixée à la paroi du coussin gonflable (16) ainsi qu'à la deuxième couche de bande (38).

2. Coussin gonflable selon la revendication 1, **caractérisé en ce que** la bande de retenue (22) est réalisée en deux couches entre un premier point de ramification (50) et un deuxième point de ramification (52), pour lequel la première portion de bande de commande (42) est placée en un premier point d'accouplement (54) sensiblement au milieu entre les points de ramification (50, 52) à la première couche de bande (36) et la deuxième portion de bande de commande (44) est fixée à la deuxième couche de bande (38) en un deuxième point d'accouplement (56) sensiblement au milieu entre les points de ramification (50, 52).

3. Coussin gonflable selon l'une des revendications précédentes, **caractérisé en ce que** les deux couches de bande (36, 38) forment un losange lorsque le coussin gonflable (14) est gonflé, pour lequel les deux points de ramification (50, 52) et les deux points d'accouplement (54, 56) forment chacun un sommet du losange.

4. Coussin gonflable selon l'une des revendications précédentes, **caractérisé en ce que**, lorsque le coussin gonflable (14) est complètement gonflé, un point de liaison (46) de la première portion de bande de commande (42) avec la paroi (16) du coussin gonflable et un point de liaison (48) de la deuxième portion de bande de commande (44) avec la paroi (16) du coussin gonflable sont sensiblement opposés l'un à l'autre.

5. Coussin gonflable selon l'une des revendications précédentes, **caractérisé en ce que** la fermeture de l'ouverture d'évacuation (26) comprend deux pattes de fermeture (28) pour fermer l'ouverture d'évacuation (24), lesquelles sont fixées à l'intérieur du coussin gonflable (14) à la deuxième extrémité de la bande de retenue (34), pour lequel les pattes de fermeture (28) s'étendent de l'intérieur du coussin gonflable (14) à travers l'ouverture d'évacuation (24) vers l'extérieur du coussin gonflable (14) et sont fixées de l'extérieur à la paroi du coussin gonflable (16).

6. Coussin gonflable selon l'une des revendications précédentes, **caractérisé en ce que**, lorsque le coussin gonflable (14) est gonflé, la fermeture de l'ouverture d'évacuation (26) est sollicitée par une pression interne du coussin gonflable en direction d'une position ouverte, laquelle libère l'ouverture d'évacuation (24) permettant un flux de gaz.

7. Coussin gonflable selon l'une des revendications précédentes, **caractérisé en ce qu'**une longueur de bande de retenue, une longueur de bande de commande et une longueur des deux couches de bande (36, 38) sont adaptées à une géométrie du coussin gonflable (14) de telle sorte que la fermeture d'ouverture d'évacuation (26) prend, lorsque le coussin gonflable (14) est entièrement gonflé, une position de fermeture dans laquelle l'ouverture d'évacuation (24) est essentiellement fermée.

8. Coussin gonflable selon l'une des revendications précédentes, **caractérisé en ce que** la paroi du coussin gonflable (16) présente une portion de paroi avant (18) et une portion de paroi arrière (20), pour lequel l'ouverture d'évacuation (24) est réalisée dans la portion de paroi arrière (20) et la première extrémité de bande de retenue (32) est reliée de manière fixe à la portion de paroi avant (18).

9. Ensemble de volant de direction comprenant un volant de direction de véhicule (12) qui peut tourner autour d'un axe de direction (A), et un module de coussin gonflable qui présente un coussin gonflable (14) selon l'une des revendications précédentes.
